# EUROPÄISCHE PATENTANMELDUNG

(11) **EP 0 704 268 A1**
(43) Veröffentlichungstag der Anmeldung: **03.04.1996**
(21) Anmeldenummer: 95111204.4
(22) Anmeldetag: 17.07.1995
(51) Int. Cl.: B23D 61/02

(54) **Kreissägeblatt**

(30) Priorität: 01.08.1994 DE 4427204
(71) Anmelder: WERKZEUG- und MASCHINENFABRIK STEHLE GMBH & CO., D-87700 Memmingen (DE)
(72) Erfinder: Jungjohann, Manfred, D-54558 Grillenfeld (DE)
(74) Vertreter: Grünecker, Kinkeldey, Stockmair & Schwanhäusser Anwaltssozietät

(57) **Zusammenfassung**

Die Erfindung betrifft ein Kreissägeblatt mit Sägezahnpaaren (5), die zwei im wesentlichen einander entgegengesetzt gerichtete Zahnspitzen (4) aufweisen, mit zumindest einer Aussparung (7) zwischen benachbarten Sägezahnpaaren, wobei im Bereich dieser Aussparung zumindest ein, vorzugsweise symmetrischer Vorsprung (8) vorgesehen ist, der der Stabilisierung des Sägeblattes und der Begrenzung der Eindringtiefe für Einstich-Sägeaufgaben dient. Im übrigen sind die Sägezähne richtungabhängig paarweise zur Verwendung des Sägeblattes in beiden Umfangsrichtungen angeordnet.

## Beschreibung

Die vorliegende Erfindung betrifft ein Kreissägeblatt mit Sägezahnpaaren, die zwei im wesentlichen einander entgegengesetzt gerichtete Zahnspitzen aufweisen, mit zumindest einer Aussparung zwischen benachbarten Sägezahnpaaren.

Kreissägeblätter, die für den Einsatz in beide Umfangs-Drehrichtungen oder ein Umspannen um 180^{o} geeignet sind und entsprechende Sägezahnanordnungen aufweisen, haben eine verdoppelte Lebensdauer. Überdies kann das Sägeblatt, das oftmals zweimal mit dem Werkstück in Eingriff bringbar ist, sowohl im Vor- als auch im Rücklauf eine Sägearbeit ausführen.

Aus der DE-OS 20 31 846 ist ein in beiden Drehrichtungen verwendbares Sägeblatt der eingangs vorgenannten Art bekannt. Hierbei weist die äußere Umlaufkante nacheinander im wesentlichen M-förmige Zähne auf, die durch bogenförmige Ausnehmungen hinterschnitten sind. Derartige Sägeblätter sind hinsichtlich Laufruhe und Querstabilität sowie bequemer Handhabung für Einstich-Sägearbeiten noch nicht zufriedenstellend.

Aus der DE-OS 26 16 497 ist ein in beide Umfangsrichtungen verwendbares Sägeblatt bekannt, das reversible, selbstschärfende Sägezähne mit einer konkaven Freifläche aufweist. Ein solches Sägeblatt ist für eine Vielzahl von Sägeaufgaben aufgrund der geringen Zähnezahl ungeeignet. Überdies steht hier der Selbstschärfungseffekt im Vordergrund.

Der Erfindung liegt daher die Aufgabe zugrunde, ein Kreissägeblatt der eingangs genannten Art zu schaffen, das variabel einsetzbar ist und hohe Laufruhe mit erhöhter Querstabilität im Verzahnungsbereich verbindet und sich bevorzugt für Einstich-Sägearbeiten eignet.

Diese Aufgabe wird erfindungsgemäß dadurch gelöst, daß im Bereich der Aussparung zumindest ein Vorsprung vorgesehen ist.

Eine solche Anordnung wirkt sich nicht nur stabilisierend auf die Laufruhe des Sägeblattes, sondern insbesondere auch auf ein laufruhiges Eintauchverhalten des Sägeblattes für Einstichvorgänge aus, wobei überdies eine sichere, durch das Verhältnis der Höhe des Vorsprunges zur Zahnhöhe der Sägeblattzähne bestimmte Begrenzung der Eintauchtiefe des Kreissägeblattes bei derartigen Sägeaufgaben gegeben ist.

Ein weiterer Vorteil einer derartigen Gestaltung der Aussparung zwischen benachbarten Sägezahnpaaren besteht darin, daß ein solcher Vorsprung als Fortsetzung der Spanfläche der Sägezähne einen leichten und schnellen Abtransport der Späne gewährleistet.

Nach einer ersten, bevorzugten Ausführungsform der Erfindung ist der Vorsprung symmetrisch zwischen gegenüberliegenden, einander zugewandten Sägezähnen zweier benachbarter Sägezahnpaare angeordnet.

Vorzugsweise ist die Gestaltung derart getroffen, daß der Vorsprung die Aussparung zwischen den zwei benachbarten Zähnezahnpaaren praktisch in zwei Unter-Aussparungen teilt, wobei die Höhe des Vorsprunges gegenüber dem spanflächenseitigen Zahngrund der Sägezähne so gewählt ist, daß eine erste, ideelle Verbindungsgerade zwischen zwei einander zugewandten Zahnspitzen zweier benachbarter, durch die Aussparung voneinander getrennter Sägezähne durch den Vorsprung tangiert oder geschnitten wird.

Vorzugsweise ist der Vorsprung in seiner Form halbkreisartig oder trapezförmig ausgebildet.

Durch die erfindungsgemäße Gestaltung des Sägeblattes wird sowohl die Laufruhe verbessert als auch ein definierter Anschlag für Einstich-Sägearbeiten geschaffen, z.B. zum stirnseitigen Nuten von Spanplatten oder dgl.

Vorzugsweise werden die Sägezähne durch Hartmetall-Schneideinsätze gebildet.

Weitere, bevorzugte Ausgestaltungen des Erfindungsgegenstandes sind in den übrigen Unteransprüchen dargestellt.

Die Erfindung wird nachstehend anhand von zwei Ausführungsbeispielen und zugehörigen Zeichnungen näher erläutert. In diesen zeigen:
- Fig. 1: eine Ansicht eines Kreissägeblattes nach einem ersten Ausführungsbeispiel der Erfindung,
- Fig. 2: eine vergrößerte Teil-Darstellung eines ca. 120^{o} umfassenden Ausschnittes aus dem Kreissägeblatt nach Fig. 1,
- Fig. 3: eine Ansicht eines Kreissägeblattes nach einem weiteren Ausführungsbeispiel der Erfindung, und
- Fig. 4: eine Teilansicht des Kreissägeblattes nach Fig. 3, in einer der Darstellungsweise nach Fig. 2 entsprechenden Darstellung.

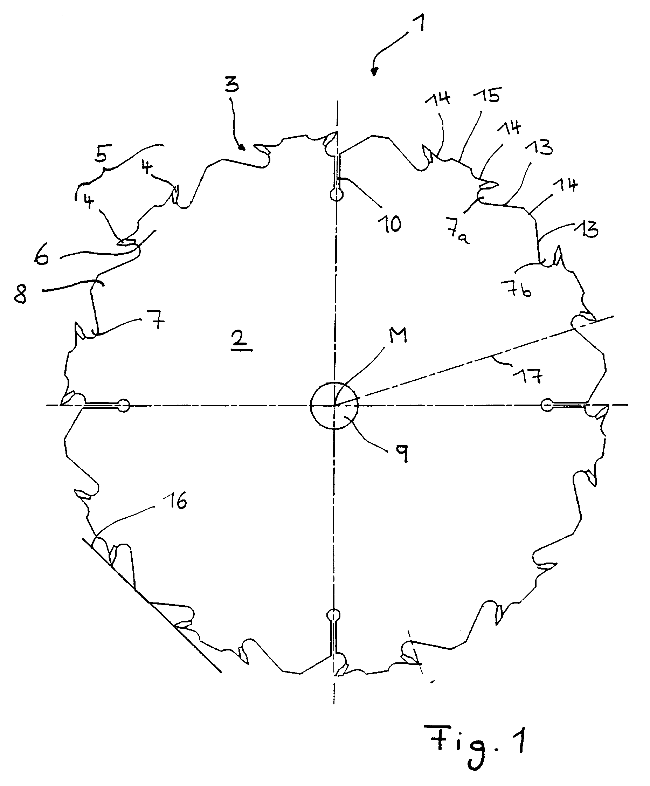

Ein erstes Ausführungsbeispiels eines Kreissägeblattes 1 ist in Fig. 1 dargestellt. Ein Tragabschnitt 2 des Kreissägeblattes 1 weist entlang seiner Umfangskante einen Sägezahnabschnitt 3 auf, bestehend aus einer Abfolge von paarweise angeordneten Sägezähnen 4, wobei die Zähne 4 eines Sägezahnpaares 5 an einem gemeinsamen Lagerungsabschnitt 6 jeweils in opponierender, zu den in beiden Umfangsrichtungen benachbarten Zähnen 4 der benachbarten Sägezahnpaare 5 gewandter, geneigter Anordnung angeordnet sind, so daß jedes Sägezahnpaar 5 dem Freissägeblatt 1 eine Verwendbarkeit als Wendesäge, die in beide Umfangsrichtungen für Sägeaufgaben verwendbar ist, verleiht.

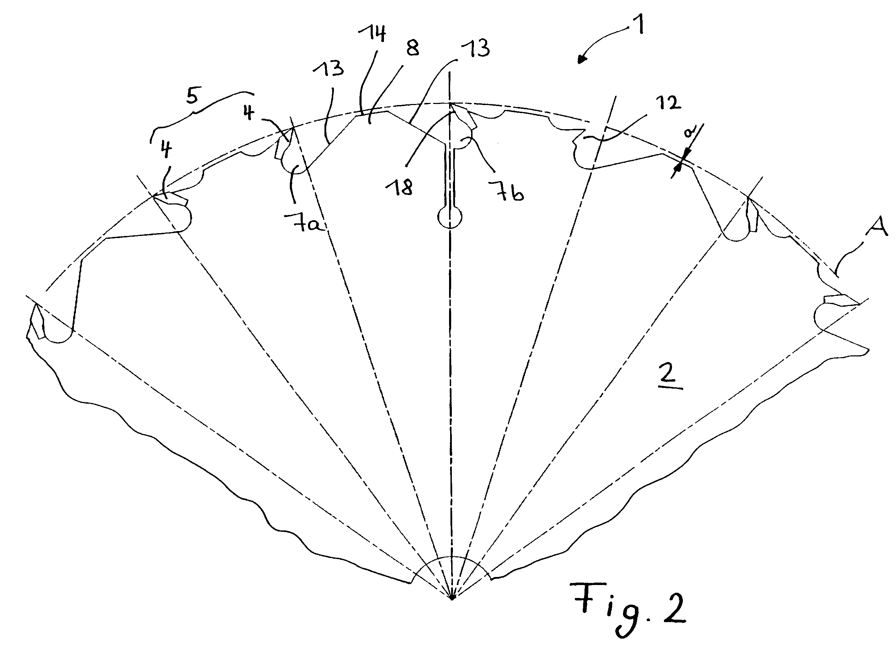

Die einander zugewandten Zähne 4 zweier benachbarter Sägezahnpaare 5 sind durch eine Aussparung 7 voneinander getrennt, die ihrerseits einen Vorsprung 8 aufweist, der sich, wie im einzelnen Fig. 2 zeigt, vorzugsweise bis in den Millimeterbereich im Verhältnis zu einem die Zahnspitzen der Sägezähne 4 verbindenden Umkreis radial nach außen erstreckt.

Das Kreissägeblatt 1 weist im übrigen um seinen Mittelpunkt M die übliche Zentrier- und Lagerungsöffnung 9 zur Befestigung des Kreissägeblattes auf einem Antriebsaggregat einer Kreissäge auf. telpunkt M des Kreissägeblattes 1 bildet.

Ein derartiges Kreissägeblatt 1 kann in vorteilhafter Weise sowohl im Vor- als auch im Rückwärtsbetrieb, d.h. teilweise in beide Umfangsrichtungen angetrieben werden bzw. einfach um 180^{o} umgespannt und mit dann frischen, noch unverbrauchten Sägezähnen 4 verwendet werden. In bezug auf einen bestimmten Sägezahn 4 gehört jeweils der in Umfangrichtung übernächste Sägezahn 4 der gleichen Umfangs-Drehrichtung an, so daß in bezug auf die am Kreissägeblatt 1 insgesamt vorgesehenen Sägezähne 4 jeweils die Hälfte für einen Sägevorgang in Wirkungseingriff ist.

Neben der sicheren Begrenzung der Eindringtiefe des Kreissägeblattes 1 durch die Vorsprünge 7 gewährleisten die den Vorsprung 8 bildenden seitlichen Schenkel 13 vorteilhafte Spanabtransportflächen, die mit der Spanfläche 18 der Sägezahnpaare 5 durch die kreisbogenartigen Aussparungen 7a, 7b verbunden sind, die durch eine die jeweilige Zahnspitze eines Sägezahnes 4 mit dem Mittelpunkt M des Kreissägeblattes 1 verbindende, ideale Radiuslinie 17 geschnitten werden.

Bei diesem Ausführungsbeispiel wird ein Umfangsabschnitt zwischen zwei Sägezähnen 4 eines Sägezahnpaares 5 durch die zugehörigen Teilflächen (unter Bildung des Freiwinkels) bestimmt, an die sich Freiaussparungen 14 muldenförmig anschließen. Zwischen den Freiaussparungen 14 ist ein durch eine planare Tangentialfläche begrenzter, radial vorspringender Verbindungsabschnitt vorgesehen.

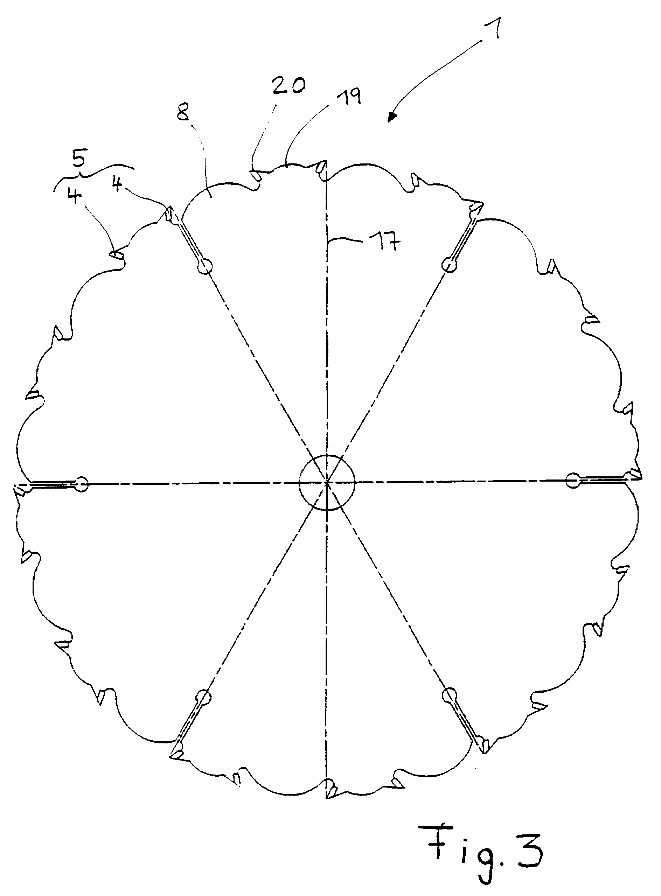

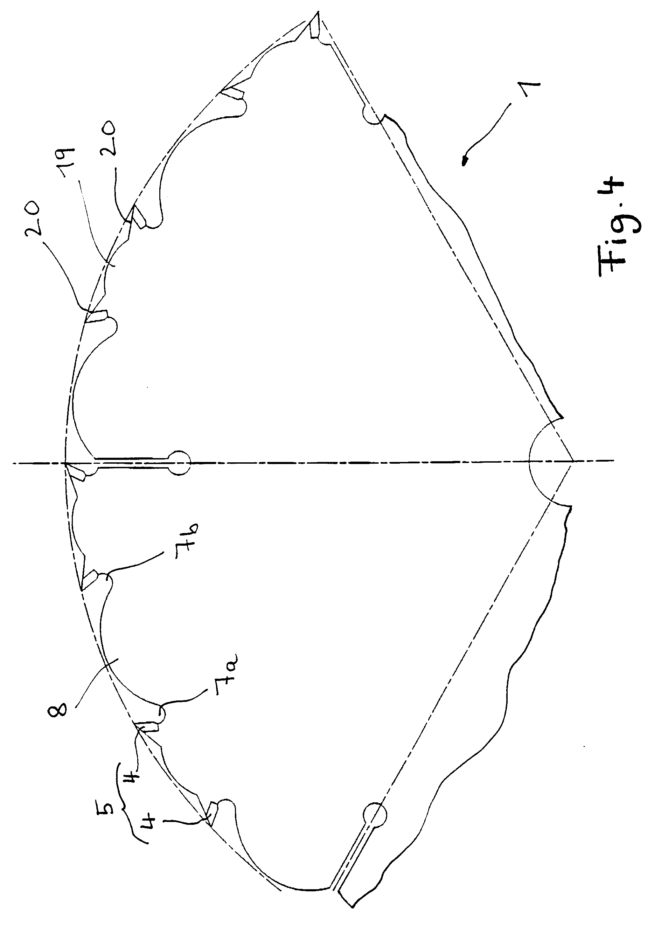

Ein weiteres Ausführungsbeispiel der Erfindung ist in den Fig. 3 und 4 dargestellt, wobei sich dieses Ausführungsbeispiel für das Kreissägeblatt nach Fig. 3 von dem vorerläuterten Ausführungsbeispiel nach Fig. 1 nur dadurch unterscheidet, daß die Vorsprünge 8 in diesem Fall nicht trapezförmig, sondern kreisbogenförmig ausgebildet sind und die Freiflächen 20 der Sägezähne 4 eines Sägezahnpaares 5 ebenfalls durch einen kreisbogenförmigen Abschnitt 19 miteinander verbunden sind.

Im übrigen sind für gleiche Elemente auch in diesem Ausführungsbeispiel die gleichen Bezugszeichen wie in dem ersten Ausführungsbeispiel verwendet, so daß eine nochmalige Erläuterung der Konfiguration Überdies weist das Kreissägeblatt 1 in Umfangsrichtung beabstandet radiale Einschnitte 10 auf, die in einer Spannungsfrei-Aussparung, in die gegebenenfalls Kupferniete bündig mit dem Freissägeblatt 1 eingesetzt sind, münden und die der Bewegungsfreiheit des Freissägeblattes im Außenbereich und der Förderung der Laufruhe dienen.

In dem in Fig. 1 dargestellten Ausführungsbeispiel werden die Sägezähne 4 durch Hartmetall-Schneideinsätze gebildet, wobei in Fig. 2 ein Sägezahn 4 im rechten oberen Bereich weggelassen ist, um die Aufnahme (Aussparung 12) für die Hartmetall-Schneideinsätze als Sägezähne 4 zu verdeutlichen.

In dem Ausführungsbeispiel nach den Fig. 1 und 2 ist der Vorsprung als in bezug auf die benachbarten Sägezähne 4 symmetrischer, im Querschnitt trapezförmiger Vorsprung 8 ausgebildet, begrenzt durch die beiden zulaufenden Schenkel 13, die durch eine Tangentialfläche 14 miteinander verbunden sind. Der Vorsprung 8 hält die Ausnehmung 7 unter Bildung von Unterausnehmungen 7a, 7b symmetrisch; diese sind benachbart zu den Spanflächen 18 der Sägezähne 4.

Jeder Lagerungsabschnitt 6 eines Sägezahnpaares 5 weist hinterschnittene Freiflächen 14, getrennt durch einen planaren Abschnitt 15, auf.

Der Vorsprung 8 erstreckt sich radial bis auf eine Höhe, in der eine erste ideelle Verbindungsgerade 16 zwischen zwei einander zugewandten Zähnen 4 zweier benachbarter Sägezahnpaare 5 tangiert oder geschnitten wird. Durch den Abstand a des Vorsprunges 8 von dem in Fig. 2 mit A bezeichneten, die Zahnspitzen der Sägezähne 4 verbindenden Umkreis wird zugleich eine Einstichtiefe des Kreissägeblattes 1 bei Verwendung zu Einstich-Sägevorgängen bestimmt.

In Abhängigkeit vom Durchmesser und von der Zähnezahl des Kreissägeblattes kann selbstverständlich die Höhe des Vorsprungs 8 auch unterhalb dieser Verbindungsgeraden 16 bleiben.

Die Unter-Aussparungen 7a, 7b sind im wesentlichen bogenförmig nach innen gekrümmt und schneiden eine zweite, ideelle Verbindungsgerade 17, die eine Zahnspitze eines zugehörigen Sägezahnes 4 mit dem Mitdes Kreissägeblattes 1 nach dem zweiten Ausführungsbeispiel nicht erforderlich erscheint, vielmehr insoweit auf die obigen Darlegungen verwiesen wird. Auch in diesem Fall sorgt der kreisbogenförmige Vorsprung 8 für erhöhte Laufruhe und die Festlegung einer definierten Einschnittiefe bei Einschnitt-Sägeaufgaben, bei denen das Kreissägeblatt 1 in radialer Richtung in das Werkstück eingreift.

Bei diesem Ausführungsbeispiel wird ein Umfangsabschnitt zwischen zwei Sägezähnen 4 eines Sägezahnpaares 5 durch zwei (geradlinige) Freiflächen 20 bestimmt (unter Bildung des Freiwinkels), die durch einen kreisbogenförmigen Verbindungsabschnitt 19, symmetrisch zu den Sägezähnen 4 angeordnet, verbunden sind.

## Patentansprüche

1. Kreissägeblatt mit Sägezahnpaaren, die zwei im wesentlichen einander entgegengesetzt gerichtete Sägezähne aufweisen, mit zumindest einer Aussparung zwischen benachbarten Sägezahnpaaren, **dadurch gekennzeichnet,** daß im Bereich der Aussparung (7) zumindest ein Vorsprung (8) vorgesehen ist.

2. Kreissägeblatt nach Anspruch 1, **dadurch gekennzeichnet,** daß der Vorsprung (8) symmetrisch zwischen gegenüberliegenden, einander zugewandten Sägezähnen (4) zweier benachbarter Sägezahnpaare (5) angeordnet ist.

3. Kreissägeblatt nach Anspruch 1 oder 2, **dadurch gekennzeichnet,** daß der Vorsprung (8) eine erste ideelle Verbindungsgerade (16) zwischen zwei einander zugewandten Sägezähnen (4) zweier benachbarter Sägezahnpaare (5) tangiert oder schneidet.

4. Kreissägeblatt nach zumindest einem der vorhergehenden Ansprüche 1 bis 3, **dadurch gekennzeichnet,** daß der Vorsprung (8) halbkreisförmig ausgebildet ist.

5. Freissägeblatt nach zumindest einem der vorhergehenden Ansprüche 1 bis 3, **dadurch gekennzeichnet,** daß der Vorsprung (8) trapezförmig ausgebildet ist.

6. Kreissägeblatt nach zumindest einem der vorhergehenden Ansprüche 1 bis 3, **dadurch gekennzeichnet,** daß der Vorsprung (8) von zwei aufeinander zulaufenden geraden Schenkeln (13) begrenzt ist, die durch eine tangentiale Oberfläche (15) verbunden sind.

7. Kreissägeblatt nach zumindest einem der vorhergehenden Ansprüche 1 bis 6, **dadurch gekennzeichnet,** daß beiderseits des Vorsprungs (8) eine Aussparung (7a, 7b) vorgesehen ist.

8. Freissägeblatt nach Anspruch 7, **dadurch gekennzeichnet,** daß der Vorsprung (8) und die Aussparungen (7a, 7b) symmetrisch zu den einander zugewandten Sägezähnen (4) benachbarter Sägezahnpaare (5) angeordnet sind.

9. Kreissägeblatt nach einem der Ansprüche 7 oder 8, **dadurch gekennzeichnet,** daß die Aussparungen (7a, 7b) im wesentlichen bogenförmig nach innen gekrümmt sind und eine zweite ideelle Verbindungsgerade (17) zwischen einer Zahnspitze der Sägezähne (4) und dem Mittelpunkt (M) des Kreissägeblattes (1) schneiden.

10. Freissägeblatt nach zumindest einem der vorhergehenden Ansprüche 1 bis 9, **dadurch gekennzeichnet,** daß ein Umfangsabschnitt zwischen zwei Sägezähnen (4) eines Sägezahnpaares (5) zwei im wesentlichen durch jeweils einen Freiwinkel der Sägezähne (4) bestimmte Freiflächen (20) in Verbindung mit Freiaussparungen (14) sowie einen in radialer Richtung vorspringenden Verbindungsabschnitt (15) zwischen den Freiaussparungen (14) aufweist.

11. Kreissägeblatt nach Anspruch 10, **dadurch gekennzeichnet,** daß der Verbindungsabschnitt (15) planar ist.

12. Freissägeblatt nach zumindest einem der vorhergehenden Ansprüche 1 bis 9, **dadurch gekennzeichnet,** daß ein Umfangsabschnitt zwischen zwei Sägezähnen (4) eines Sägezahnpaares (5) zwei im wesentlichen durch jeweils einen Freiwinkel der Sägezähne (4) bestimmte, geradlinige Freiflächen (20) aufweist, die durch einen radial vorspringenden Verbindungsabschnitt (19) miteinander verbunden sind.

13. Freissägeblatt nach Anspruch 12, **dadurch gekennzeichnet,** daß der Verbindungsabschnitt (19) kreisbogenförmig ausgebildet und symmetrisch zu den zugehörigen Sägezähnen (4) angeordnet ist.
